Europäisches Patentamt

**European Patent Office**

**Office européen des brevets**

(11) Numéro de publication: **0 366 570 B1**

(12) **FASCICULE DE BREVET EUROPEEN**

(45) Date de publication de fascicule du brevet: **26.01.94** (51) Int. Cl.⁵: **G11B 5/80**, G11B 5/70

(21) Numéro de dépôt: **89420395.9**

(22) Date de dépôt: **17.10.89**

Jointe à la demande no. 89912251.9/0439531
(numéro de dépôt/numéro de publication de la
demande européenne) par décision du 24.02.92.

(54) **Carte à mémoire magnétique à grande capacité et procédé de fabrication.**

(30) Priorité: **18.10.88 FR 8814217**

(43) Date de publication de la demande:
**02.05.90 Bulletin 90/18**

(45) Mention de la délivrance du brevet:
**26.01.94 Bulletin 94/04**

(84) Etats contractants désignés:
**BE CH DE ES GB IT LI NL SE**

(56) Documents cités:
EP-A- 0 146 056    EP-A- 0 367 686
DE-A- 3 529 756    DE-A- 3 727 197
DE-B- 1 269 660    FR-A- 2 120 070
FR-A- 2 206 548    FR-A- 2 605 623
US-A- 4 391 851

(73) Titulaire: **GEMPLUS S.C.A.**
**Avenue du Pic de Bertagne**
**Parc d'Activités de la Plaine de Jouques**
**F-13420 Gemenos(FR)**

(72) Inventeur: **Pingaud, Bernard**
**Kodak-Pathé**
**Zone Industrielle**
**F-71102 Châlon sur Saone CEDEX(FR)**

(74) Mandataire: **Ballot, Paul Denis Jacques et al**
**Cabinet Ballot-Schmit**
**7, rue le Sueur**
**F-75116 Paris (FR)**

Rank Xerox (UK) Business Services
(3.10/3.09/3.3.3)

## Description

La présente invention concerne une carte à mémoire magnétique à grande capacité, ainsi qu'un procédé mis en oeuvre pour la fabriquer. Cette carte est particulièrement utile pour constituer un système de dossiers portables décentralisés.

Les milieux d'enregistrement magnétiques haute densité, ayant des densités d'information supérieures à 50 kbits/cm$^2$, sont connus ; ils sont cependant susceptibles d'être effacés, soit par des champs externes, soit par des actions mécaniques, et sont utilisés seulement sur des bandes et des disques qu'il est possible de protéger par des pochettes, ou des cassettes. C'est pourquoi il n'a pas été jusqu'à présent commercialisé de milieu d'enregistrement magnétique sur carte ayant une densité d'information supérieure à 5 kbits/cm$^2$, la densité courante des cartes magnétiques connues étant de l'ordre de 0,1 à 0,3 kbit/cm$^2$. Les cartes portables, dans leur utilisation courante, sont en effet soumises à des manipulations et à des contraintes dues à l'environnement, lesquelles risquent d'endommager de façon d'autant plus irrémédiable la couche magnétique et les informations qui y sont inscrites, que la densité de ces informations dans la couche est plus élevée. En outre, l'information inscrite dans le milieu magnétique doit être ineffaçable par les champs magnétiques courants externes afin de garantir la sécurité des informations et sa résistance à l'usure doit permettre de nombreuses relectures des informations.

Il serait très souhaitable de pouvoir disposer d'une carte magnétique à la fois capable de contenir une grande quantité d'informations susceptibles d'être complétées ou mise à jour, avec cependant une sécurité et une permanence appropriées.

Une telle carte pourrait être utilisée dans de nombreuses applications telles que : dossier médical individuel, en médecine humaine ou vétérinaire, fiches d'entretien de machines, gestion de parking, de stocks, de cheptel, opérations sur comptes bancaires, etc.

La réalisation d'une telle carte pose cependant de nombreux problèmes.

Il est connu qu'une haute densité d'enregistrement nécessite pour maintenir la qualité du signal lors de l'écriture et de la lecture un espacement tête/couche aussi faible que possible. Cependant, pour protéger la couche magnétique lors des manipulations courantes, on prévoit en général une surcouche protectrice. Cette surcouche contribue à augmenter l'espacement tête/couche. Les deux objectifs précités, qualité du signal et protection de l'information, sont donc à priori contradictoires.

D'autre part, le support de la carte et le milieu magnétique lui-même doivent posséder une déformation élastique, c'est-à-dire, pouvoir retrouver leur forme initiale même après des courbures répétées et sans provoquer de craquelures dans le milieu magnétique. Celui-ci ne doit donc pas être cassant. Il ne doit pas non plus être trop mou, car il serait moins résistant à l'usure, et ne pourrait se passer de surcouche. La carte doit en outre être thermiquement stable pour supporter sans déformation les températures courantes de l'environnement. Ces exigences de déformation élastique et de stabilité thermique sont particulièrement importantes pour une carte à haute capacité qui doit contenir un grand nombre de pistes/cm. Les supports en polychlorure de vinyle habituellement utilisés pour les cartes magnétiques à faible densité (portant par exemple des pistes ISO) ont une plus grande tolérance à ces contraintes parce que ces cartes ne comportent que peu de pistes et sont donc moins tributaires d'un bon positionnement de la tête par rapport à la couche.

Il est connu par le document EP-A 0 146 056 de réaliser une carte à mémoire constituée d'un support semi-rigide et stable en dimension portant sur la majeure partie d'au moins une de ses surfaces, un milieu d'enregistrement magnétique contenant des particules magnétiques et un liant. Ce dernier est constitué d'une matière plastique d'un type évoqué ci-dessus et ne permet pas de répondre aux exigences de déformation élastique et de stabilité thermique.

Il est connu par ailleurs, par le document EP-A-0 367 686 qui a été déposé le même jour par le même demandeur de la présente invention, une carte magnétique du même type que celle de la présente invention; il s'en distingue par le fait qu'il concerne la réalisation d'une image sur au moins l'une des faces de la carte par transfert thermique.

La présente invention a pour objet une carte à mémoire magnétique à grande capacité constituée d'un support semi-rigide et stable en dimension portant sur la majeure partie d'au moins une de ses surfaces un milieu d'enregistrement magnétique contenant des particules magnétiques d'hexaferrite de Ba ou de Sr ayant un champ coercitif supérieure à 4000 Oe (320 kA/m), un liant caractérisé en ce que celui-ci est formé d'un polyuréthane tridimensionnel réticulé et un polytétrafluoroéthylène comprenant éventuellement du polyéthylène et des additifs tels que des agents tensioactifs, des lubrifiants solides dans lesquels plus de 90%, et de préférence plus de 99% des particules, ont une dimension inférieure à 3$\mu$m, à raison de moins de 2% en masse par rapport à la masse des particules magnétiques, des pigments, milieu qui ne comporte pas de surcouche et présente une densité d'information d'au moins 5 Kbits/cm$^2$, une usure correspondant à une perte de signal électrique égale ou inférieure à 5% pour 2000 passages, une rugosité arithmétique moyenne inférieure à 10nm, une abrasivité inférieure à 600$\mu$m, et une résistance à la rayure inférieure à 1,5$\mu$m.

La carte a une densité d'information d'au moins 5 kbits/cm$^2$ et, de préférence, supérieure à 50 kbits/cm$^2$.

Les paramètres ci-dessus seront définis plus loin, dans la description des tests de mesure.

La carte selon l'invention contient au moins 10 pistes/cm, et de préférence au moins 40 pistes/cm. On peut ainsi obtenir, pour une carte ayant les dimensions normalisées de 54 x 86 mm, et suivant la surface couverte, une capacité totale égale ou supérieure à 1 Mbit.

La présente invention a aussi pour objet un procédé de fabrication de la carte précitée, selon lequel la surface du milieu d'enregistrement magnétique est traitée sur une plaque de verre poli pendant le pressage à chaud de la carte et, éventuellement, en même temps que le liant du milieu magnétique est réticulé.

L'ensemble des caractéristiques revendiquées ci-dessus permet d'obtenir une carte à mémoire portable répondant aux exigences de capacité d'enregistrement élevée et de bonne résistance aux contraintes et aux manipulations et dont les propriétés magnétiques permettent une écriture, une lecture et une protection permanente et correcte des informations.

Selon l'invention, le milieu magnétique de la carte présente une usure correspondant à une perte de signal électrique égale ou inférieure à 5 % pour au moins 2000 passages, et, de préférence, pour au moins 20 000 passages, une rugosité arithmétique inférieure à 10 nm, une abrasivité inférieure à 600 $\mu$m, et une résistance à la rayure inférieure à 1,5 $\mu$m. Ces paramètres sont mesurés par les tests suivants :

### Test électrique d'usure

Sur un milieu d'enregistrement magnétique, on choisit un certain nombre de pistes réparties uniformément sur l'ensemble de la couche magnétique.

Sur chaque piste, on enregistre un signal qu'on relit un nombre de fois déterminé. (Nombre de passages).

L'amplitude du signal de lecture est mesurée à l'aide d'un oscilloscope. La perte de signal correspond à la différence entre la première lecture et la dernière, et elle est exprimée en % du signal recueilli à la première lecture.

### Test de rugosité

On déplace le milieu magnétique à mesurer à 40 $\mu$m/s sur une distance de 2 mm. A l'aide d'un convertisseur, on mesure le déplacement d'un capteur dont la partie en contact avec le milieu est une bille de 5 $\mu$m de rayon. La force appliquée sur cette bille est de 0,03 mN. La tension analogique à la sortie du convertisseur, proportionnelle aux oscillations du capteur, est traitée numériquement à l'aide d'un ordinateur qui calcule les critères de rugosité. On utilisera la rugosité arithmétique moyenne (écart moyen arithmétique du profil par rapport à la ligne moyenne, intégré sur la longueur de base).

### Test d'abrasivité

La méthode utilisée pour évaluer l'abrasivité d'une couche consiste à faire défiler un tore de cuivre de dureté Vickers 52, ayant un diamètre de fil de 1,6 mm et un rayon intérieur de boucle de 8 mm, sur la couche à mesurer, sur une longueur de 5 cm, avec une force d'application constante F = 0,6 N et une vitesse de 8 cm/s, 1400 fois aller et retour.

On obtient sur le tore une figure d'abrasion représentée par une pseudo-ellipse dont le grand axe est d'autant plus grand que la couche est plus abrasive. On mesure la longueur du grand axe de cette pseudo-ellipse sur un microscope équipé d'une mire micrométrique. On utilise cette longueur comme paramètre de définition de abrasivité.

### Test de rayure

On réalise le test de rayure en faisant passer un diamant sphérique de rayon R = 15 $\mu$m sous une charge de 4 g sur la surface du milieu d'enregistrement magnétique.

La résistance à la rayure est exprimée en profondeur de rayure en $\mu$m, calculée à partir de la demi-largeur a de l'empreinte générée par le diamant sur la couche, selon la formule :

$$\text{profondeur} = R - R\sqrt{1 - \frac{a^2}{R^2}}$$

Les particules magnétiques utilisées sont des particules d'hexaferrite de Ba ou de Sr ayant un champ coercitif élevé, supérieur à 4000 Oe et de préférence, supérieur à 5000 Oe. Un tel champ coercitif élevé assure la sécurité des informations enregistrées qui sont ineffaçables par des champs externes courants, tout en permettant une capacité de réinscription par écrasement.

Des particules d'hexaferrite de baryum ou de strontium sont connues depuis longtemps. On peut en particulier les obtenir par coprécipitation en solution alcaline d'un sel ferrique et d'un sel de Ba ou Sr, puis calcination à haute température du coprécipité obtenu. C.D. Mee et J.C.Jeschke " Single-Domaine Properties in Hexagonal ferrites " J. of Applied Physics, Vol. 34, n°4, 1271-2, 1963, décrivent la préparation de telles particules. Ce procédé ancien présente cependant l'inconvénient d'aboutir à un produit sous forme de blocs très durs, difficiles à broyer. Les particules après broyage sont de taille non homogène, difficilement dispersables dans les liants utilisés pour les milieux magnétiques, et ont tendance à former des agglomérats lors du traitement de calcination. Ces inconvénients rendent les particules inaptes à la préparation de couches d'enregistrement magnétiques. De nombreux procédés ont été proposés récemment pour remédier à ces inconvénients, tels que la synthèse hydrothermale, ou des procédés améliorés de coprécipitation.

Un procédé de préparation d'hexaferrites préféré est celui qui fait l'objet de la demande de brevet français 8814221, intitulée "Procédé de préparation de particules magnétiques d'hexaferrite, particules obtenues et produit les contenant". Ce procédé présente l'avantage de fournir des particules d'hexaferrite ayant un rapport de la répartition des champs de commutation (dite ci-après "SFD" pour Switching Field Distribution) au champ coercitif (SFD/Hc) inférieur à 0,45, et, de préférence inférieur à 0,40 et une aimantation à saturation supérieure à 55 emu/g, et de préférence supérieure à 60 emu/g.

Le SFD caractérise la largeur de la distribution des champs de commutation. A partir du cycle d'hystérésis (flux magnétique M en fonction du champ magnétisant H), on trace la courbe dM/dH en fonction de H, (dérivée du cycle d'hystérésis) et on calcule la largeur à mi-hauteur $\Delta H$ du pic observé quand H = Hc ; cette valeur est appelée SFD. On divise cette valeur de SFD par le champ coercitif des particules, ce qui donne le rapport sans dimension SFD/Hc.

Une valeur faible de SFD/Hc indique que les moments magnétiques des particules commutent pour un champ proche du champ coercitif. Les transitions de flux lors d'un enregistrement magnétique seront donc mieux définies, l'épaisseur de la couche enregistrée sera plus faible et mieux déterminée, contribuant ainsi à un bruit plus faible, donc à un rapport signal/bruit plus élevé, particulièrement lorsque la densité d'information est élevée. Une valeur faible de SFD/Hc indique aussi une répartition étroite de la taille des particules, une non agglomération de ces particules et une composition chimique plus pure.

L'aimantation et le champ coercitif sont mesurés au VSM (Vibrating Sample Magnetometer) sous un champ magnétisant maximum de 20 000 Oe (1590 kA/m).

Dans un mode de réalisation préféré, on utilise des particules d'hexaferrite de Ba ou de Sr ayant un indice de forme d'au moins 1,5:1, une longueur comprise entre 0,1 et 0,3 $\mu$m, et un champ coercitif supérieur à 4000 Oe et de préférence supérieur à 5000 Oe.

Les cartes portables sont susceptibles d'être courbées et manipulées sans précaution. Plus le nombre de pistes/cm est élevé, plus le choix du liant du milieu magnétique est critique, puisqu'il doit avoir à la fois une cohésion assez élevée pour maintenir les particules magnétiques en place et pour résister à des déformations permanentes générées par des contraintes telles que la flexion ou la compression, et assez dur pour résister aux abrasions et aux rayures.

On a trouvé qu'un milieu comprenant (a) un liant formé d'un polyuréthanne tridimensionnel réticulé et (b) un polytétrafluoroéthylène comprenant éventuellement du polyéthylène confére à la couche magnétique de la carte les propriétés recherchées.

Le polyuréthanne tridimensionnel réticulé est formé à partir (a) d'un polyol ramifié de poids moléculaire moyen inférieur à 4000 contenant au moins 8 % en poids de groupes OH et (b) d'un prépolymère d'un isocyanate comprenant au moins trois fonctions isocyanate. On peut utiliser comme polyol des polyester-polyols aromatiques ou aliphatiques ou des polyéther-polyols.

Les polyester-polyols sont des composés contenant des groupes hydroxyle préparés à partir d'acides dicarboxyliques ou de dérivés de ces acides tels que leurs anhydrides, tels que l'acide adipique, les acides téréphtalique, phtalique, isophtalique, tétrahydrophtalique, hexahydrophtalique, l'acide maléique, et d'alcools

EP 0 366 570 B1

polyfonctionnels tels que les glycols, le glycérol, l'hexanediol, l'hexanetriol, le néopentylglycol, le triméthylolpropane, le pentaérythrol, etc.

Les polyéther-polyols sont aussi des composés contenant des groupes hydroxyle préparés à partir d'oxydes d'alkylène et des mêmes alcools que ceux décrits ci-dessus pour les polyesters.

La quantité de groupes -COOH provenant des acides et de groupes -OH provenant des alcools est telle que le rapport OH/COOH est supérieur à 1. Par condensation, tous les groupes COOH réagissent, alors qu'il reste des groupes hydroxyle libres. Les polyols utilisés selon l'invention comprennent au moins 8 % en poids de groupes OH. De préférence, l'acide dicarboxylique est un acide phtalique hydrogéné, éventuellement en mélange avec d'autres acides, et l'alcool polyfonctionnel est le triméthylopropane, éventuellement en mélange avec d'autres alcools.

L'expression "prépolymère d'isocyanate", utilisée habituellement dans la chimie des polyuréthannes, désigne un composé avec au moins trois fonctions isocyanate, c'est-à-dire une fonctionnalité au moins de trois. De tels composés peuvent être obtenus par exemple, à partir de 3 moles d'un diisocyanate aliphatique ou aromatique et 1 mole d'un alcool trivalent, tel que le glycérol, l'hexanetriol ou le triméthylol propane.

Les quantités respectives de polyol et d'isocyanate sont telles que le rapport NCO/OH total est supérieur à 0,9, et de préférence égal ou supérieur à 1. L'expression : OH total, signifie que si le milieu magnétique comprend une autre source de groupes OH que le polyol, il faut en tenir compte pour le calcul de la teneur en prépolymère d'isocyanate, afin que le milieu soit entièrement réticulé.

Le mélange de liants est présent dans le milieu d'enregistrement magnétique à raison de 10 à 60 g pour 100 g de particules magnétiques.

Le milieu magnétique comprend, en outre, comme il est connu, un certains nombre d'additifs tels que des agents tensioactifs, des lubrifiants, des pigments, etc. Ces additifs ne doivent pas être susceptibles d'exsuder de la couche et d'en perturber la surface.

Il est connu d'introduire dans les couches magnétiques des lubrifiants, afin de réduire le coefficient de frottement entre la couche et la tête, de diminuer l'usure de l'une et de l'autre, et d'améliorer les propriétés de glissement de la couche.

Les lubrifiants liquides ne sont pas appropriés, car ils ont tendance à exsuder du milieu magnétique par élévation de température, et en particulier quand le traitement final du support magnétique exige des températures élevées, par exemple supérieures à 100°C, et même supérieures à 150°C. C'est pourquoi on utilise de préférence des lubrifiants solides dans lesquels plus de 90 %, et de préférence plus de 99 % des particules, ont une dimension inférieure à 3 $\mu$m, à raison de moins de 2 % en masse par rapport à la masse des particules magnétiques.

On peut utiliser comme lubrifiant solide de fines particules comme décrit ci-dessus, de graphite, de sulfure de molybdène ou de tungstène, de polyéthylène. De préférence on utilise du polytétrafluoroéthylène (PTFE). Le PTFE est vendu sous forme de poudres par différents fabriquants. On peut en trouver par exemple chez Du Pont de Nemours sous la dénomination commerciale de Vydax. Il est important que le lubrifiant solide soit compatible avec les autres constituants du milieu d'enregistrement, et qu'il ne contienne pas plus de 10% de particules ayant une dimension supérieure à 3 $\mu$m et, de préférence pas plus de 1%, d'une part, et d'autre part, que sa teneur dans le milieu magnétique ne dépasse pas 2% par rapport à la masse des particules magnétiques. On peut obtenir une telle répartition en dimension de particules de lubrifiant par tamisage, filtration, ou toute autre technique connue.

Sans être lié par des considérations théoriques, on pense que la structure réticulée du liant est telle qu'elle permet d'emprisonner les particules de lubrifiant solide de dimensions inférieures à 3 $\mu$m.

Le lubrifiant solide à base de polytétrafluoroéthylène peut être associé à un polymère inerte tel qu'une polyoléfine, par exemple du polyéthylène.

On peut utiliser, en plus du polytétrafluoroéthylène tel que décrit ci-dessus, des lubrifiants connus tels que les huiles de silicone, en quantité inférieure à 1 parties pour 100 parties, en poids, de particules magnétiques. Un milieu magnétique répondant aux caractéristiques ci-dessus est celui décrit à la demande de brevet français 8814219 intitulée "Milieu d'enregistrement magnétique".

Les autres additifs sont ceux couramment utilisés dans les milieux d'enregistrement magnétique.

On peut utiliser un ou plusieurs agents tensioactifs pour assurer la mouillabilité, la dispersabilité et l'étalement de la dispersion. On peut utiliser, par exemple. un ester d'acide polycarboxylique, un ester organique complexe d'acide phosphorique, de la lécithine, des acides gras tels que l'acide palmitique, ou l'acide oléique, ou des mélanges de ces agents tensio-actifs. On peut utiliser aussi comme agent de dispersion un copolymère vinylique à base de chlorure de vinyle comprenant des groupes OH. Un tel copolymère comprend en général de 70 à 90 % de chlorure de vinyle, les autres monomères étant choisis parmi l'acétate de vinyle, l'alcool polyvinylique, et des esters acryliques ou méthacryliques portant

5

éventuellement des groupes hydroxyle. Dans ce cas, la quantité de composés contenant des groupes isocyanate doit être calculée de façon à tenir compte des groupes OH du copolymère vinylique, qui doit être lui aussi complètement réticulé dans le réseau tridimensionnel de polyuréthanne. Dans un mode de réalisation préféré, on utilise un alkylphénoxypolyéthoxyéthyl ester de l'acide phosphorique, à raison de 3 à 8 g pour 100 g de particules magnétiques et un copolymère vinylique à raison de moins de 10 % en masse par rapport au liant total.

En outre, la composition de liants peut comprendre les additifs habituels tels que des poudres abrasives comme $Al_2O_3$ ou $Cr_2O_3$, des pigments, sous forme de poudre fine ou de colloïde, tels que du noir de carbone pour colorer la couche et de la silice pour améliorer la qualité et la stabilité de la dispersion.

Enfin, elle peut éventuellement contenir des agents pour favoriser la réticulation, suivant le liant utilisé et la cinétique que l'on souhaite.

On forme une dispersion de couchage en mélangeant les particules magnétiques, les différents composants du liant et les additifs, en présence de solvants. On utilise des mélanges solvants connus dans la technique des dispersions magnétiques.

Parmi les solvants utiles, on peut citer des esters tels que l'acétate de méthyle, l'acétate d'éthyle, l'acétate d'isopropyle,le tétrahydrofuranne, des cétones telles que la méthyléthylcétone, la méthylisobutylcétone et la cyclohexanone, le nitrométhane, le nitroéthane, le dichloroéthane, des solvants benzéniques tels que le toluène, etc. Les quantités utiles de solvants peuvent être déterminées par le technicien en fonction des résultats souhaités, des composés particuliers de la dispersion et de l'appareillage utilisé. Des dispersions particulièrement utiles sont décrites dans les exemples.

La composition de liants est appliquée sur un support qui fera ensuite partie intégrante de la carte finale. Ce support doit donc être compatible avec les autres feuilles de plastique constituant la carte ; il doit en particulier pouvoir être soudé à chaud avec ces feuilles. Il contribue d'autre part aux propriétés finales de la carte ; il doit donc être stable en dimension, résistant à la température et élastique. On peut utiliser tout support en matière plastique polymère répondant à ces exigences, tel que, par exemple, des polyoléfines, des acétates de cellulose, du polytéréphtalate d'éthylène, du polyimide, de la polysulfone, etc. ; il peut être collable à chaud sur les feuilles de plastique constituant la carte, avec ou sans couche adhésive supplémentaire.

Dans un mode de réalisation préféré, le support utilisé est un support en polycarbonate ayant une épaisseur comprise entre 20 et 80 $\mu$m, de préférence entre 40 et 50 $\mu$m. On sait que le polycarbonate est stable en dimension et résistant à la température. On doit cependant utiliser un polycarbonate qui se soude à chaud à des températures qui ne dégradent pas le liant de la dispersion magnétique appliquée dessus.

Après couchage, on oriente éventuellement longitudinalement les particules magnétiques par tout procédé connu, puis on sèche . La couche obtenue a une épaisseur à l'état sec inférieure à 10 $\mu$m et de préférence à 6 $\mu$m. On peut ensuite assembler le film magnétique tel que préparé ci-dessus, ou éventuellement deux films magnétiques si l'on souhaite que la carte comprenne un milieu magnétique sur chaque face, avec un ou plusieurs feuillets en matière plastique constituant le coeur de la carte, de façon à obtenir une épaisseur totale de carte de 400 à 1000 $\mu$m. Les matières plastiques des feuillets et des supports de film magnétique sont choisies de façon à pouvoir être soudées par la chaleur. Les feuilles d'une même carte peuvent être formées de la même matière plastique ou de matières différentes.

Dans un mode de réalisation préféré, on utilise la même matière plastique pour les feuillets du coeur de la carte et pour le support de la couche magnétique. Les feuilles autres que celles qui supportent la couche magnétique peuvent avoir une épaisseur comprise entre 20 et 300 $\mu$m. On peut placer une couche magnétique sur un seul côté de la carte, ou sur les deux côtés, sur la totalité de leur surface, ou seulement sur une partie. Les parties restant libres peuvent servir à imprimer des informations visibles telles que écriture, dessins, textes, photos, graphiques, etc.

Selon le procédé de l'invention, on réalise l'assemblage des feuilles de matière plastique par pression à chaud, le milieu magnétique se trouvant appliqué sur une plaque de verre poli.

Dans un mode de réalisation, on assemble des feuilles pour former un sandwich comportant une couche magnétique sur une ou sur les deux faces et on place ce sandwich entre deux plaques de verre poli, les milieux magnétiques se trouvant appliqués sur les plaques de verre. L'ensemble est introduit soit dans une presse thermique, soit dans une presse à haute fréquence. La température doit être supérieure à la température de transition vitreuse des substances plastiques utilisées, support et liant, et inférieure à la température de dégradation du liant. En général, cette température est comprise entre 80°C et 200°C, et lorsque le liant est un polyuréthanne réticulé tel que décrit ci-dessus et que le support est du polycarbonate, la température de la presse est comprise entre 130°C et 190°C, et de préférence entre 160°C et 180°C. La pression varie suivant que l'on utilise une presse thermique ou une presse à haute fréquence, et peut varier entre 100 et 1000 N/cm$^2$.

Enfin, on refroidit en maintenant le sandwich sous pression.

Un procédé tel qu'indiqué ci-dessus est décrit à la demande de brevet français 8814220 intitulée : "Procédé de traitement de surface de couches magnétiques".

Dans le cas de l'utilisation de feuilles de polycarbonate, on peut utiliser le procédé décrit à la demande de brevet français 8814222 intitulée "Procédé de soudage de feuilles de polycarbonate".

Ce procédé selon l'invention a l'avantage de combiner dans une même étape 1) l'assemblage de la carte, 2) la réticulation du liant et 3), le traitement de surface de la couche magnétique.

Les cartes peuvent être coupées aux dimensions des normes actuelles des cartes portables, soit 54 x 86 mm. Elles peuvent aussi être plus grandes ou plus petites.

On peut les couper avant ou après l'assemblage à chaud de la carte. Dans un mode de réalisation préféré, on fait une coupe intermédiaire comprenant plusieurs cartes. Les feuilles de matière plastique constituant ces coupes intermédiaires sont maintenues ensemble par des points de soudure par ultrasons avant d'être soumises au chauffage sous pression.

Après refroidissement, les cartes sont finalement coupées dans le format final souhaité, par tout procédé connu.

Le milieu magnétique des cartes terminées présente un champ coercitif supérieur à 4000 Oe et le plus souvent compris entre 4500 et 6000 Oe, une aimantation à saturation supérieure à 60 emu/cm$^3$ et de préférence supérieure à 80 emu/cm$^3$ et un rapport de la répartition des champs de commutation au champ coercitif inférieur à 0,50, et de préférence inférieur à 0,30.

Comme sur les poudres, l'aimantation et le champ coercitif sont mesurés au VSM (Vibrating Sample Magnetometer) sous un champ magnétisant maximum de 20 000 Oe (1590 kA/m).

Les exemples suivants illustrent l'invention.

On utilise dans les exemples les produits commerciaux suivants :

- Desmophen®,     marque commerciale pour un groupe de polyesters et de polyethers réticulables par des isocyanates, vendue par Bayer AG.

- Desmodur®,     marque commerciale pour un groupe d'isocyanates et de prépolymères d'isocyanates vendue par Bayer AG.

- Gafac®,     marque commerciale pour un groupe d'agents tensioactifs anioniques qui sont des esters organiques complexes de phosphate, vendue par General Aniline and Film Corp.

- Vinnol®,     marque commerciale pour des copolymères d'alcool polyvinylique, vendue par Wacker-Chemie Gesellschaft.

- Vydax®,     marque commerciale pour des télomères fluorocarbonés vendue par E.I. Du Pont de Nemours.

- Lexan®     marque commerciale pour des polycarbonates, vendue par General Electric Co.

Les particules d'hexaferrite de baryum utilisées dans tous les exemples sont préparées suivant le procédé de la demande de brevet français 8814221. Elles ont une acicularité comprise entre 1,5:1 et 3:1 et une longueur de 0,1 à 0,3 μm. Leur aimantation à saturation est de 62 ± 2 emu/g, leurs champs coercitifs sont compris entre 4700 Oe et 5300 Oe, leur SFD est compris entre 1800 et 2100 Oe et leurs rapports SFD/Hc sont compris entre 0,34 et 0,45.

Les résultats des mesures mécaniques et magnétiques sur les cartes obtenues sont rassemblés au tableau ci-dessous pour tous les exemples.

On observe en outre que les cartes obtenues dans tous les exemples présentent une excellente résistance aux solvants , à la température et aux agressions externes. Des sollicitations en flexions répétées ne génèrent aucun dommage sur la couche magnétique.

Exemple 1

On prépare une dispersion magnétique comprenant :

| | |
|---|---|
| Particules d'hexaferrite de Ba | 100,0 g |
| Agent tensioactif GAFAC® RE 610 | 7,0 g |
| Vinnol E 22/40 A | 1,0 g |
| $SiO_2$ | 1,0 g |
| $Cr_2O_3$ | 3,0 g |
| $Al_2O_3$ | 6,0 g |
| Noir de carbone | 3,0 g |
| Desmophen® 651 | 15,8 g |
| Desmodur® L | 18,2 g |
| Vydax® AR | 0,4 g |

On ajoute à cette dispersion le mélange de solvants suivant, à raison de 55 parties de dispersion pour 45 parties de mélange de solvants :

| | |
|---|---|
| Acétate d'éthyle | 50 parties |
| THF | 25 parties |
| Acétate de méthyle | 25 parties |

Après avoir agité et filtré, on applique la dispersion sur une feuille de polycarbonate LEXAN® 8800 de 40 à 60 $\mu$m d'épaisseur, et on sèche pour obtenir une couche de 6 $\mu$m d'épaisseur à l'état sec. On applique un rectangle du film obtenu sur un empilement de feuilles de polycarbonate permettant d'obtenir une épaisseur de 600 $\mu$m, on fait quatre points de soudure aux ultrasons pour maintenir le sandwich en place, on applique le sandwich côté film magnétique sur une plaque de verre et on soude à une température comprise entre 160°C et 180°C sous une pression de 100 à 1000 N/cm$^2$. On coupe une carte aux normes ISO (54 x 86 mm) et on détermine les propriétés magnétiques et mécaniques de cette carte.

Le test électrique d'usure est mis en oeuvre sur une piste de 200 $\mu$m de large, à une vitesse d'enregistrement de 200 mm/s, et une fréquence de 14,6 kHz. (Ceci correspond à une densité de 1457 bits/cm). Le nombre de passages est de 2000.

Exemple 2

On prépare une dispersion magnétique contenant :

| | |
|---|---|
| Particules d'hexaferrite de Ba | 100,0 g |
| GAFAC® RE 610 | 3,0 g |
| Vinnol® 22/40 | 2,0 g |
| $SiO_2$ | 1,5 g |
| $Al_2O_3$ | 15,0 g |
| Noir de carbone | 3,0 g |
| Desmophen® 651 | 20,8 g |
| Desmodur® L | 27,2 g |
| Copolymère de polytétrafluoroéthylène/polyéthylène (50/50) (dimension de particules égale ou inférieure à 3 $\mu$m) | 1,0 g |

On utilise comme solvant le mélange suivant, à raison de 53 parties de dispersion pour 47 parties de mélange de solvants :

| Acétate d'isopropyle | 55 |
|---|---|
| Nitroéthane | 15 |
| Dichloroéthane | 20 |
| Méthylisobutylcétone | 10 |

On prépare une carte comme à l'exemple précédent, et l'on met en oeuvre le test électrique d'usure dans les mêmes conditions qu'à l'exemple précédent.

Exemple 3

On prépare une dispersion magnétique contenant :

| Particules d'hexaferrite de baryum | 100 g |
|---|---|
| Ester d'acide polycarboxylique | 6 g |
| Vinnol® E22/40A | 1 g |
| $SiO_2$ | 2 g |
| $Al_2O_3$ | 15 g |
| Noir de carbone | 3 g |
| Desmophen® 651 | 21,4 g |
| Desmodur® L | 27,9 g |
| Polytétrafluoroéthylène/polyéthylène (50/50) (dimension de particules égale ou inférieure à 3 $\mu$m) | 1,5 g |

On utilise le mélange solvant suivant, à raison de 62 parties de dispersion pour 38 parties de mélange solvant :

| Acétate d'éthyle | 50 |
|---|---|
| Méthylisobutylcétone | 25 |
| Nitroéthane | 25 |

On prépare une carte comme à l'exemple 1 et l'on met en oeuvre le test électrique d'usure dans les mêmes conditions qu'à l'exemple 1.

Exemple 4

On prépare une dispersion magnétique contenant :

| Particules d'hexaferrite de baryum | 100 g |
|---|---|
| GAFAC® RE 610 | 3 g |
| Silicone Byk®-310 | 0,1 g |
| Vinnol® E22/40A | 2,0 g |
| $SiO_2$ | 1,5 g |
| $Al_2O_3$ | 15 g |
| Noir de carbone | 3 g |
| Desmophen® 651 | 20,2 g |
| Desmodur® L | 27,5 g |
| Copolymère Polytétrafluoroéthylène/polyéthylène (50/50) (dimension de particules égale ou inférieure à 3 $\mu$m) | 1,0 g |

On utilise comme solvant le mélange suivant, à raison de 58 parties de dispersion pour 42 parties de mélange de solvants :

| Cyclohexanone | 22 |
| Acétate d'éthyle | 9 |
| Méthyléthylcétone | 60 |
| Toluène | 9 |

On prépare une carte comme à l'exemple 1, et l'on met en oeuvre le test électrique d'usure dans les mêmes conditions, sauf que le nombre de passages est de 24 000.

Exemple 5

On prépare une dispersion magnétique contenant :

| Particules d'hexaferrite de baryum | 100 g |
| GAFAC® RE 610 | 3,0 g |
| Lécithine | 3,0 g |
| Silicone Byk®-310 | 0,2 g |
| $SiO_2$ | 15 g |
| $Al_2O_3$ | 1,5 g |
| Vinnol® 22/40 | 2 g |
| Desmophen® 651 | 20,5 g |
| Desmodur® L | 28 g |
| Copolymère Polytétrafluoroéthylène/polyéthylène (50/50) (dimension de particules égale ou inférieure à 3 $\mu$m) | 1,2 g |

On utilise comme solvant le mélange suivant, à raison de 61 parties de dispersion pour 39 parties de mélange de solvants :

| Cyclohexanone | 20 |
| Acétate d'éthyle | 20 |
| Méthyléthylcétone | 38 |
| Toluène | 22 |

On prépare une carte comme à l'exemple 1, et l'on met en oeuvre le test électrique d'usure dans les mêmes conditions, sauf que le nombre de passages est de 24 000.

Exemple 6

On prépare une dispersion magnétique contenant :

| Particules d'hexaferrite de baryum | 100 g |
| Dextrol OC 70 vendu par Dexter | 2,0 g |
| Acide palmitique | 1,5 g |
| $SiO_2$ | 1,5 g |
| $Al_2O_3$ | 15 g |
| Vinnol® 22/40 | 1,5 g |
| Desmophen® 651 | 20,8 g |
| Desmodur® L | 28 g |
| Copolymère Polytétrafluoroéthylène/polyéthylène (50/50) (dimension de particules égale ou inférieure à 3 $\mu$m) | 1 g |
| Vydax® | 1 g |

On utilise comme solvant le mélange suivant, à raison de 55 parties de dispersion pour 45 parties de mélange de solvants :

| Cyclohexanone | 12 |
|---|---|
| Acétate d'éthyle | 25 |
| Méthyléthylcétone | 63 |

On prépare une carte comme à l'exemple 1, et on met en oeuvre le test électrique d'usure dans les mêmes conditions, sauf que le nombre de passages est de 24 000.

### TABLEAU

| Mesures / Exemples | 1 | 2 | 3 | 4 | 5 | 6 |
|---|---|---|---|---|---|---|
| **Magnétiques** | | | | | | |
| Champ coercitif Oe (kA/m) | 4650 (370) | 4850 (386) | 5000 (398) | 5000 (398) | 6000 (477) | 5700 (453) |
| SFD Oe (kA/m) | 2000 (159) | 2000 (159) | 1700 (135) | 1200 (95) | 1200 (95) | 1350 (107) |
| Im emu/cm³ | 82 | 86 | 69 | 89 | 91 | 99 |
| SFD/Hc | 0,43 | 0,41 | 0,34 | 0,24 | 0,20 | 0,24 |
| **Mécaniques** | | | | | | |
| Test électrique d'usure pour 2000 passages | < 1% | < 1% | < 1% | | | |
| pour 24 000 passages | | | | < 1% | < 1% | < 1% |
| Rugosité (nm) | 6,5 | 7,8 | 8,8 | 9 | 7,2 | 6,2 |
| Abrasivité (µm) | 510 | 425 | 510 | 400 | 480 | 400 |
| Résistance à la rayure (µm) | 1,25 | 0,85 | 1,25 | 0,37 | 0,93 | 0,67 |

## Revendications

1. Carte à mémoire magnétique à grande capacité constituée d'un support semi-rigide et stable en dimension portant sur la majeure partie d'au moins une de ses surfaces un milieu d'enregistrement magnétique contenant des particules magnétiques d'hexaferrite de Ba ou de Sr ayant un champ coercitif supérieur à 4000 Oe (320 kA/m), un liant caractérisé en ce que celui-ci est formé d'un

11

polyuréthane tridimensionnel réticulé et un polytétrafluoroéthylène comprenant éventuellement du polyéthylène et des additifs tels que des agents tensioactifs, des lubrifiants solides dans lesquels plus de 90%, et de préférence plus de 99% des particules, ont une dimension inférieure à 3$\mu$m, à raison de moins de 2% en masse par rapport à la masse des particules magnétiques, des pigments, milieu qui ne comporte pas de surcouche et présente une densité d'information d'au moins 5 Kbits/cm$^2$, une usure correspondant à une perte de signal électrique égale ou inférieure à 5% pour 2000 passages, une rugosité arithmétique moyenne inférieure à 10nm, une abrasivité inférieure à 600$\mu$m, et une résistance à la rayure inférieure à 1,5$\mu$m.

2. Carte selon la revendication 1, qui a une densité d'information supérieure à 50 kbits/cm$^2$.

3. Carte selon l'une des revendications 1 ou 2, contenant au moins 10 pistes/cm.

4. Carte selon la revendication 3, contenant au moins 40 pistes/cm.

5. Carte selon la revendication 1, dans laquelle les particules d'hexaferrite de Ba ou de Sr ont une forme aciculaire, d'indice de forme entre 1,5 : 1 et 3 : 1.

6. Carte selon la revendication 5, dans laquelle les particules magnétiques ont un champ coercitif supérieur à 5000 Oe (400 kA/m).

7. Carte selon l'une des revendications 5 ou 6, dans laquelle les particules magnétiques ont un rapport de la répartition des champs de commutation au champ coercitif égal ou inférieur à 0,45 et une aimantation à saturation supérieure à 55 emu/g.

8. Carte selon la revendication 7, dans laquelle les particules magnétiques ont un rapport de la répartition des champs de commutation au champ coercitif égal ou inférieur à 0,40 et une aimantation à saturation supérieure à 60 emu/g.

9. Carte selon l'une des revendications 1 à 8, dans laquelle le milieu d'enregistrement magnétique comprend un liant qui est un polyuréthanne tridimensionnel hautement réticulé formé à partir (a) d'un polyol ramifié de poids moléculaire moyen inférieur à 4000 comprenant au moins 8% en poids de groupements OH et (b) d'un prépolymère d'un isocyanate comprenant au moins 3 fonctions isocyanate.

10. Carte selon la revendication 9, dans laquelle les quantités de polyol et de polyisocyanate constituant le polyuréthanne du milieu d'enregistrement magnétique sont telles que le rapport NCO/OH total est supérieur à 0,9.

11. Carte selon l'une des revendications 1 à 10 dans laquelle le lubrifiant comprend, en plus du polytétrafluoroéthylène, une polyoléfine.

12. Carte selon l'une des revendications 1 à 11, dans laquelle le milieu magnétique de la carte présente une aimantation à saturation supérieure à 60 emu/cm$^3$, et un rapport de la répartition des champs de commutation au champ coercitif inférieur à 0,50.

13. Carte selon la revendication 12, dans laquelle le milieu magnétique présente une aimantation à saturation supérieure à 80 emu/cm$^3$, et un rapport de la répartition des champs de commutation au champ coercitif inférieur à 0,30.

14. Carte selon l'une des revendications 1 à 13 dans laquelle le support est formé d'au moins une feuille de polycarbonate.

15. Procédé de fabrication d'une carte à mémoire magnétique à grande capacité constituée d'un support semi-rigide et stable en dimension portant sur la majeure partie d'au moins une de ses surfaces un milieu d'enregistrement magnétique contenant des particules magnétiques d'hexaferrite de Ba ou de Sr ayant un champ coercitif supérieur à 4000 Oe (320 kA/m), un liant formé d'un polyuréthane tridimensionnel réticulé et un polytétrafluoroéthylène comprenant éventuellement du polyéthylène et des additifs tels que des agents tensioactifs, des lubrifiants solides dans lesquels plus de 90%, et de préférence plus de 99% des particules, ont une dimension inférieure à 3µm, à raison de moins de 2% en masse par rapport à la masse des particules magnétiques, des pigments, milieu qui ne comporte pas de surcouche et présente une densité d'information d'au moins 5 kbits/cm$^2$, une usure correspondant à une perte de signal électrique égale ou inférieure à 5% pour 2000 passages, une rugosité arithmétique moyenne inférieure à 10nm, une abrasivité inférieure à 600 µm et une résistance à la rayure inférieure à 1,5µm, caractérisé en ce que on assemble à chaud sous pression deux ou plusieurs feuilles de matière plastique dont au moins une porte un milieu d'enregistrement magnétique, le(s) milieu(x) d'enregistrement magnétique se trouvant appliqué(s) sur une plaque de verre poli.

16. Procédé selon la revendication 15, dans lequel on presse à chaud à une température supérieure aux températures de transition vitreuse de la substance des feuilles plastiques et du liant, mais inférieure à la température de dégradation du liant.

17. Procédé selon l'une des revendications 15 ou 16, dans lequel la substance des feuilles plastiques est du polycarbonate et l'on presse à chaud entre 16° et 180°C.

18. Procédé selon l'une des revendications 15 à 17, dans lequel on presse à chaud sous une pression comprise entre 100 et 1000 N/cm$^2$.

19. Procédé selon l'une des revendications 15 à 18, dans lequel le liant est réticulé pendant le pressage à chaud de la carte.

**Claims**

1. A high capacity magnetic memory card formed of a semi-rigid support of a size that is stable, having on the greater part of at least one of its faces a magnetic recording environment containing magnetic Ba or Sr hexaferrite particles with a coercive field greater than 4,000 Oe (320 kA/m), a binding characterised in that the binding is formed of a reticulated three-dimensional polyurethane and a polytetrafluoroethylene possibly including polyethylene and additives such as tensio-active agents, solid lubricants in which more than 90% and preferably more than 99% of the particles are of a size less than 3µm, in a ratio of less than 2% mass in relation to the mass of magnetic particles, pigments, an environment that has no upper layer and has a data density of at least 5kbits/cm$^2$, a wear level corresponding to an electric signal loss equal to or less than 5% per 2,000 passages, an average arithmetical rugosity of less than 10 nm, an abrasiveness of less than 600µm, and a scratch resistance of less than 1.5µm.

2. A card in accordance with claim 1, which has a data density higher than 5 kbits/cm$^2$.

3. A card in accordance with claims 1 or 2 containing at least 10 tracks/cm.

4. A card in accordance with claim 3, containing at least 40 tracks/cm.

5. A card in accordance with claim 1, in which the Ba or Sr hexaferrite particles are of a crystal form, whose index ranges between 1.5:1 and 3:1.

6. A card in accordance with claim 5, in which the magnetic particles have a coercive field greater than 5,000 Oe (400 kA/m).

7. A card in accordance with one of claims 5 or 6, in which the ratio of the distribution of commutation fields to the coercive field of the magnetic particles is equal to or less than 0.45 and in which the saturation magnetisation is higher than 55 emu/g.

8. A card in accordance with claim 7, in which the ratio of the distribution of commutation fields to the coercive field of the magnetic particles is equal to or less than 0.40 and the saturation magnetisation is higher than 60 emu/g.

9. A card in accordance with one of claims 1 to 8, in which the magnetic recording environment includes a binding which is a highly reticulated three-dimensional polyurethane formed from (a) a ramified polyol with an average molecular weight of less than 4,000 containing at least 8 % in weight from the OH groups and (b) a pre-polymer of an isocyanate having at least 3 isocyanate functions.

10. A card in accordance with claim 9, in which the quantities of polyol and polyisocyanate forming the polyurethane of the magnetic recording environment are such that the ratio NCO/OH is higher than 0.9.

11. A card in accordance with one of claims 1 to 10 in which the lubricant contains a polyolefin as well as the polytetrafluoroethylene.

12. A card in accordance with one of claims 1 to 11, in which the magnetic environment of the card has a saturation magnetisation greater than 60 emu/cm$^3$ and a ratio of distribution of commutation fields to the coercive field of less than 0.50.

13. A card in accordance with claim 12, in which the magnetic environment has a saturation magnetisation greater than 80 emu/cm$^3$ and a ratio of distribution of commutation fields to the coercive field of less than 0.30.

14. A card in accordance with one of claims 1 to 13 in which the support is formed of at least one sheet of polycarbonate.

15. A method of manufacturing a high capacity magnetic memory card formed of a semi-rigid support of a size that is stable, having on the greater part of at least one of its faces a magnetic recording environment containing magnetic Ba or Sr hexaferrite particles with a coercive field greater than 4,000 Oe (320 kA/m), a binding formed of a reticulated three-dimensional polyurethane and a polytetrafluoroethylene possibly including polyethylene and additives such as tensio-active agents, solid lubricants in which more than 90 % and preferably more than 99 % of the particles are of a size less than 3μm, in a ratio of less than 2 % mass in relation to the mass of magnetic particles, pigments, an environment that has no upper layer and has a data density of at least 5kbits/cm$^2$, a wear level corresponding to an electric signal loss equal to or less than 5 % per 2,000 passages, an average arithmetical rugosity of less than 10 nm, an abrasiveness of less than 600 μm and a scratch resistance of less than 1.5 μm, characterised in that two or several sheets of plastics material are assembled under heat and pressure, at least one of the sheets having a magnetic recording environment, the magnetic recording environment(s) having been applied to a plate of polished glass.

16. A method in accordance with claim 15, in which plastic sheets and the binding are heat pressed at a temperature greater than the vitreous transition temperatures of the substance but lower than the temperature at which the binding degrades.

17. A method in accordance with one of claims 15 or 16, in which the substance of the plastic sheets is polycarbonate and it is heat pressed at between 16° and 180°C.

18. A method in accordance with one of claims 15 to 17, in which heat pressing is carried out under a pressure level ranging between 100 and 1,000 N/cm$^2$.

19. A method in accordance with one of claims 15 to 18, in which the binding is reticulated whilst the card is being heat pressed.

**Patentansprüche**

1. Magnetische Speicherkarte mit hoher Speicherkapazität, bestehend aus einer halbsteifen und hinsichtlich ihrer Abmessungen stabilen Unterlage, die auf dem größten Teil wenigstens einer ihrer Oberflächen ein magnetisches Speichermaterial trägt, das magnetische Teilchen aus Ba- oder Sr-Hexaferrit enthält mit einem Koerzitivfeld von mehr als 4000 Oe (320 kA/m), ein Bindemittel, das dadurch gekennzeichnet ist, daß es aus einem dreidimensionalen vernetzten Polyurethan besteht und ein Polytetrafluorethylen, welches gegebenenfalls Polyethylen enthält und Additive, wie z.B. grenzflächenaktive Stoffe, feste Schmierstoffe, in denen mehr als 90 % und vorzugsweise mehr als 99 % der Teilchen eine Abmessung von kleiner 3 μm aufweisen, die weniger als 2% der Menge, bezogen auf die Menge der magnetischen Teilchen, ausmachen, Farbstoffe, wobei das Material keine Deckschicht trägt

und eine Informationsdichte von wenigstens 5 Kbits/cm$^2$, eine Abnutzung entsprechend einem elektrischen Signalverlust von gleich oder weniger als 5% bei 2000 Durchläufen, einen Mittenrauhwert von weniger als 10 nm, einen Abrieb von weniger als 600 $\mu$m und einer Kratzfestigkeit von weniger als 1,5 $\mu$m aufweist.

2. Karte nach Anspruch 1, die eine Informationsdichte von mehr als 50 Kbits/cm$^2$ aufweist.

3. Karte nach einem der Ansprüche 1 oder 2, welche wenigstens 100 Spuren/cm aufweist.

4. Karte nach Anspruch 3, welche wenigstens 40 Spuren/cm aufweist.

5. Karte nach Anspruch 1, bei der die Ba- oder Sr-Hexaferrit-Teilchen Nadelform aufweisen und eine Formzahl zwischen 1,5:1 und 3:1.

6. Karte nach Anspruch 5, bei der die magnetischen Teilchen ein Koerzitivfeld von mehr als 5000 Oe (400 kA/m) aufweisen.

7. Karte nach einem der Ansprüche 5 oder 6, bei der die magnetischen Teilchen ein Verhältnis der Verteilung des Wendefeldes zum Koerzitivfeld von gleich oder weniger als 0,45 aufweisen und eine Sättigungsmagnetisierung von mehr als 55 em E/g aufweisen.

8. Karte nach Anspruch 7, bei der die magnetischen Teilchen ein Verhältnis der Verteilung des Wendefeldes zum Koerzitivfeld von gleich oder weniger als 0,45 aufweisen und eine Sättigungsmagnetisierung von mehr als 60 em E/g aufweisen.

9. Karte nach einem der Ansprüche 1 bis 8, bei der das magnetische Speichermaterial ein Bindemittel aufweist, welches ein stark vernetztes dreidimensionales Polyurethan ist, welches gebildet ist ausgehend von (a) einem verzweigten Polyalkohol mit einem mittleren Molekulargewicht von weniger als 4000, welches wenigstens 8 Gewichtsprozent an OH-Gruppen enthält und (b) einem Isocyanat-Vorpolymerisat, welches wenigstens 3 Isocyanat-Funktionen enthält.

10. Karte nach Anspruch 9, bei der die Mengen des das Polyurethan des magnetischen Speichermediums bildenden Mengen an Polyalkohol und Polyisocyanat derart gewählt sind, daß das Verhältnis von NCO/OH gesamt größer als 0,9 ist.

11. Karte nach einem der Ansprüche 1 bis 10, bei der das Schmiermittel außer dem Polytetrafluorethylen ein Polyolefin aufweist.

12. Karte nach einem der Ansprüche 1 bis 11, bei der das magnetische Material der Karte eine Sättigungsmagnetisierung von mehr als 60 em E/cm$^3$ und ein Verhältnis der Verteilung des Wendefeldes zum Koerzitivfeld von weniger als 0,50 aufweist.

13. Karte nach Anspruch 12, bei der das magnetische Material eine Sättigungsmagnetisierung von mehr als 80 em E/cm$^3$ und ein Verhältnis der Verteilung des Wendefeldes zum Koerzitivfeld von weniger als 0,30 aufweist.

14. Karte nach einem der Ansprüche 1 bis 13, bei der die Unterlage aus wenigstens einem Polycarbonat-Blatt besteht.

15. Verfahren zur Herstellung einer magnetischen Speicherkarte mit hoher Speicherkapazität, bestehend aus einer halbsteifen und hinsichtlich ihrer Abmessungen stabilen Unterlage, die auf dem größten Teil wenigstens einer ihrer Oberflächen ein magnetisches Speichermaterial trägt, das magnetische Teilchen aus Ba- oder Sr-Hexaferrit enthält mit einem Koerzitivfeld von mehr als 4000 Oe (320 kA/m), ein Bindemittel, das aus einem vernetzten dreidimensionalen Polyurethan besteht und ein Polytetrafluorethylen, welches gegebenenfalls Polyethylen enthält und Additive, wie z.B. grenzflächenaktive Stoffe, feste Schmierstoffe, in denen mehr als 90 % und vorzugsweise mehr als 99 % der Teilchen eine Abmessung kleiner als 3 $\mu$m aufweisen und die weniger als 2 % der Menge, bezogen auf die Menge der magnetischen Teilchen ausmachen, Farbstoffe, wobei das Material keine Deckschicht trägt, und eine

15

Informationsdichte von wenigstens 5 Kbits/cm$^2$, eine Abnutzung entsprechend einem elektrischen Signalverlust von gleich oder weniger als 5% bei 2000 Durchläufen, einen Mittenrauhwert von weniger als 10 nm, einen Abrieb von weniger als 600 $\mu$m und eine Kratzfestigkeit von weniger als 600 $\mu$m und einer Kratzfestigkeit von weniger als 1,5 $\mu$m aufweist, dadurch gekennzeichnet, daß zwei oder mehrere Kuntstoffblätter im heißen Zustand und unter Druck vereinigt werden, wobei wenigstens eines der Blätter ein magnetisches Speichermaterial trägt, und das (oder die) magnetisches(n) Speichermaterial-(ien) auf einer polierten Glasplatte aufgebracht ist (sind).

16. Verfahren nach Anspruch 15, bei dem unter Hitze ein Druck ausgeübt wird, bei einer Temperatur, die größer ist als die Temperaturen des Schmelzübergangs der die Kunststoffblätter und das Bindemittel bildenden Stoffes, jedoch kleiner ist als die Zersetzungstemperatur des Bindemittels.

17. Verfahren nach einem der Ansprüche 15 oder 16, bei dem der Stoff der Kunststoffblätter Polycarbonat ist und unter Hitze ein Druck bei einer Temperatur zwischen 16° und 180°C ausgeübt wird.

18. Verfahren nach einem der Ansprüche 15 bis 17, bei dem der unter Hitze ausgeübte Druck einen Wert zwischen 100 und 1000 N/cm$^2$ aufweist.

19. Verfahren nach einem der Ansprüche 15 bis 18, bei dem das Bindemittel während des unter Hitze ausgeübten Drucks auf die Karte vernetzt wird.